# EUROPEAN PATENT SPECIFICATION

(11) **EP 1 950 018 B1**
(45) Date of publication and mention of the grant of the patent: **08.10.2014**
(21) Application number: 07001853.6
(22) Date of filing: 29.01.2007
(51) Int. Cl.: B29B 13/02, B05C 11/10

(54) **Apparatus and method for dispensing meltable material**
Vorrichtung und Verfahren zur Ausgabe schmelzbarer Materialien
Appareil et méthode de distribution d'un matériau fusible

(43) Date of publication of application: 30.07.2008
(60) Divisional application: 11161240.4
(73) Proprietor: NORDSON CORPORATION, Westlake, OH 44145-1119 (US)
(72) Inventor: Dittmann, Ralf, 21406 Melbeck (DE); Flueggen, Folker, Dr., 30625 Hannover (DE)
(74) Representative: Eisenführ Speiser

(56) References cited:
- GB-A- 1 295 706
- US-A- 3 912 630
- US-A- 5 680 961
- US-A- 5 715 972
- US-A- 6 019 255
- US-A1- 2004 200 858

## Description

### FIELD OF THE INVENTION

The present invention relates to an apparatus for dispensing meltable material and, in particular, for dispensing thermoplastic material such as hot melt adhesive according to claim 1. The present invention further relates to a method for moving a heating grid section in an apparatus for dispensing meltable material according to claim 18.

Apparatuses and methods of the afore-mentioned type are known from US 2004/200858 A1, from US 6019255 and from GB 1295706.

### BACKGROUND OF THE INVENTION

Devices of this kind for dispensing meltable material, in particular thermoplastic material such as hot melt adhesive, are known in the prior art. Thermoplastic materials or so-called "hot melt" materials have been used for many years for various purposes, including as adhesives in the manufacturing of products such as disposable diapers and in the packaging of products. Originally, the thermoplastic material was converted from a solid to a molten state in a tank having heated walls. The melted material was maintained in the molten state in the tank in sufficient volume to supply one or more applicators or dispensers. If the job or application required a substantial volume of hot melt material, a substantially large volume of material was required to be maintained in the molten or melted state, necessitating a long warm-up or start-up time for the apparatus, as well as prolonged exposure of at least some of the molten material to heat and/or to oxidise.

To avoid these problems, so-called grid-type hot melt supply systems were developed in which the solid thermoplastic material was stored in a hopper and melted upon the top of a heated grid located at the bottom of the hopper. The melted material then passed through holes in the grid into a reservoir from which the molten material was supplied by a pump to a dispenser. A typical grid-type hot melt supply system is disclosed in US-patent 3,946,645.

The heating grids of the prior art were essentially plates provided with a plurality of holes, sometimes also provided with fins between the holes. The thermoplastic material on the top of the grid was heated and melted by the grid, and the molten material then flowed through the holes from the hopper into the reservoir. US 4,666,066 discloses another grid melter comprising a reservoir atop which is mounted a heated grid. A hopper for receiving the solid thermoplastic material is mounted atop the heated grid. Mounted in the bottom of the reservoir is at least one pump and a flow path or flow passage or manifold from the reservoir outlet to the pump inlet.

When the grids did not melt brick or block form solid thermoplastic material as quickly and efficiently as desired, they needed to be repaired or replaced. Melting grids, such as the one disclosed in US 4,667,850, originally used cartridges inserted into the grids to provide heating, and the failure or inefficiency of the grid was sometimes attributable to failed heater cartridge. To avoid this problem, the design of the grids has been changed, and a single continuous heater element has been cast into the grid. This cast-in-place heater element is used instead of multiple individual heater cartridges. Grid melter with cast-in-situ heaters, such as those disclosed in US 4,771,920, are less expensive to manufacture and have a longer live than grid melters having cartridge-style heaters.

While heating grids with cast-in heating elements have been more reliable than those which used cartridges, the heating grids still needed to be repaired or replaced from time to time. Sometimes, the grid needs to be removed to provide access to the reservoir beneath the grid, such as when a foreign object has passed though the holes in the grid and fallen into the reservoir. Since the grid formed the bottom of the hopper, it has not been possible to remove the grid without also removing the hopper. Thus, removal of the grid for replacement or repair or for cleaning the reservoir has required that the entire hopper assembly be disassembled.

From US 5,680,961, US 5,680,963, US 5,699,938, and from US 5,715,972, a melting grid for a molten thermoplastic material supply system which has a different design from the above-mentioned melting grids is known. Those grids were formed in the shape of a block located in the middle of the bottom of the hopper. The grid was spaced from the sidewalls of the hopper. The design of these prior art heating grids has no holes which extend through the grid since the grid is covering only a part of the bottom of the hopper. Accordingly, these prior art grids provide a space or gap between the periphery of the grid and the interior sidewalls of the hopper on the sides of the grid. However, if it is desired to repair or replace the grid, the grid had to be removed from the hopper by lifting it through the hopper. Since the hopper is normally a large tank or drum it can be difficult to remove such a prior art grid through the hopper. Moreover, to remove the grid in such prior art systems the hopper always had to be empty.

In the aforementioned prior art, for example in US 5,680,963, a supply manifold is typically provided, either as part of the body or block forming the reservoir or in a separate block from the reservoir. The molten thermoplastic material flows from the reservoir through passages in the manifold to a pump, which can be located in the manifold block or which can be attached to the manifold block. The molten material is fed by the pump from the supply manifold to a dispensing port through lines in the manifold or lines connected to the manifold. The manifold block, like the other elements of the supply system, should be heated to maintain the molten thermoplastic material and the desired temperature throughout the supply process, and this requires that for example heater cartridges be placed in the manifold or that the manifold has cast-in-place heater elements. If the cast-in heating elements of the manifold fail, the entire manifold block has to be replaced.

Moreover, the passages in the manifold can become clogged or elements of the manifold block may need to be repaired, so the manifold should be removable so that it can be repaired or replaced as necessary. In the aforementioned prior art removal of the manifold block was, however, complicated since the manifold block was normally fixed to the reservoir section by bolts or screws to provide the necessary sealing engagement with the reservoir block.

To overcome the aforementioned problems when a removal of the manifold block is necessary US 5,680,963, provided a support harness to support the manifold assembly below the reservoir block which support harness was attached to the bottom of the reservoir block. However, this known construction provides an additional element, i.e., the support harness, and is therefore more costly than the other aforementioned prior art systems.

As can be seen in the aforementioned prior art, mounted separately from the reservoir was at least one pump for pumping the molten thermoplastic material through one or more supply hoses which were connected to the pump. Normally, a flow passage was provided from the reservoir outlet to the pump inlet, which flow passage is also called a manifold or manifold assembly.

Other prior art systems are known for example from US 4,821,922, US 5,814,790 B1, US 6,175,101, US 2005/0161468 A1, and from US 7,021,504 B2.

US 2004/200858 A1 discloses an apparatus for dispensing meltable material according to the preamble of claim 1.

Known apparatuses of the prior art are for example the MX 4000-series hot melt applicators MX 4012 and MX 4060 which were sold under the trademark "MELTEX" by Meltex Corporation, Peachtree City, Georgia, U.S.A, a subsidiary of Meltex GmbH, which is now NORDSON Engineering GmbH, Lilienthalstr. 6, 21337 Lueneburg, Germany, Other prior art apparatuses of this kind are known as the "5600 Bulk Melter" or "5600 Bulk Unloader", manufactured by the applicant. Such bulk melters are used for melting large quantities of adhesive. Generally, there are two basic types of bulk melters, one uses a heated platen inserted into a drum, pail, etc. to melt the adhesive and pump it from a container. Another type of bulk melter is essentially a large melter. Hotmelt adhesive can be added manually in large quantities, or an open drum, pall, etc. containing a block of adhesive is inserted upside down into the hopper. An example of these melters is disclosed in DE 3600020 C1.

Another prior art apparatus is known as the "6000 Melter" manufactured by the applicant. Yet another known apparatus are known from the Meltex Corporation under the names "Hot melt applicator HD-06 (high pressure)" and "Hot melt applicator GR 11 (low pressure)".

It is desired that embodiments of the present invention overcome at least one of the drawbacks of the prior art to a considerable extent and to provide an apparatus for dispensing meltable material which apparatus is easier to maintain. It is further desired that embodiments of the present invention provide a method for moving a heating grid section and/or a manifold section in an apparatus for dispensing meltable material.

### SUMMARY OF THE INVENTION

The above mentioned objects are solved by the independent claims. Further preferred embodiments are shown by the dependent claims.

Generally, the present invention provides a heating grid section which is releasably attachable to the hopper section, whereas the hopper section is tiltable with respect to the heating grid section. An advantage of the present invention is that it is not necessary anymore to remove the heating grid through the hopper. Therefore, the present invention makes a very quick and easy change of the heating grid section possible without the necessity to disassemble the heating grid by loosening any bolts or screws. This additionally makes it very easy to maintain the heating grid section, e.g. to clean the heating grid section. Furthermore, it is possible to remove the heating grid section just by pulling it off from the reservoir section by tilting away the hopper section from the top of the heating grid section and then pulling the heating grid section away.

In general, reactive meltable material like polyurethane degrades or chars over time if exposed to high temperature and humidity. Charing is a solidification of material that does not melt and such solidification can effect bonding and can also plug a nozzle of a dispensing unit. Accordingly, it is needed to clean the apparatus to remove this charing or to remove cured or partially cured material. Therefore, cleaning of parts of apparatuses for dispensing meltable material on a regularly base is mandatory to achieve good application results. The same applies if a customer of such apparatuses for dispensing meltable material wants to change the meltable material to be dispensed. The ability to clean and service prior art dispensing equipment for dispensing meltable material, e.g. polyurethane, is limited. Furthermore, the reservoir of known apparatuses for dispensing meltable material has usually angled and/or rectangular holes or channels to guide the melted material to the manifold which is adjacent horizontally to the reservoir. Moreover, in known apparatuses for dispensing meltable material pumps are not easy to access. Additionally, known manifolds are normally shared with other product lines and therefore are not optimized for access and cleaning.

According to the preferred embodiments of present invention the heating grid is preferably an Independent section of the inventive apparatus for dispensing meltable material. Also, according to the preferably independent character of the inventive heating grid as a separate section of the whole apparatus it is possible to make the heating grid section releasably attachable to the hopper section so that it is finally possible to remove the heating grid section from the hopper section without accessing through the tank or drum of the hopper itself.

According to an aspect of the present invention there is further provided a reservoir section for receiving and at least temporarily storing the material from the heating grid section, whereas the reservoir section being connected to the heating grid section, which is releasably attachable to the reservoir section. Accordingly, the heating grid section can be pulled out of the inventive apparatus for dispensing meltable material Independently of a possible removal of the hopper section and/or the reservoir section.

Preferably, the heating grid section is releasably attachable to the hopper section and/or the reservoir section by at least one releasable clamp. Such a clamp, preferably located at the outside of the hopper section and/or the reservoir section and the heating grid section it is possible to make the heating grid section releasably attachable to the hopper section and/or the reservoir section without the requirement to use bolts or screws while it is still possible to provide a sealing engagement between the heating grid section and the hopper section and/or the reservoir section.

According to yet another aspect of the present invention there is provided a connection between the hopper section and the reservoir sections so that the connection fixes the heating grid section between the hopper section and the reservoir section. This connection can also comprise at least one clamp. According to this embodiment it is possible to clamp the heating grid section between the hopper section and the reservoir section without the necessity to have any further connecting objects between the heating grid section and the hopper section or between the heating grid section and the reservoir section, respectively. In this embodiment the heating grid section comes into sealing engagement with the hopper section and with the reservoir section by pressing, e.g. by using clamps, the heating grid section between the hopper section and the reservoir section.

This kind of connection makes it extremely easy release and take out the heating grid section to change, maintain or clean it.

Generally, the present invention furthermore provides a manifold section which is releasably and directly attachable to the reservoir section into a sealing engagement with the reservoir section. Therefore, the present invention makes a very quick and easy change of the manifold section possible. This additionally makes it very easy to maintain the manifold section, e.g. to clean the manifold section. When used in conjunction with the releasable heating grid section, this also makes it easy to change out/or clean the reservoir section.

An advantage of this aspect of the present invention is that it is not necessary anymore to use a separate harness or support bracketry to mount and support the manifold section. Instead of such additional components this part of the present invention provides that the manifold section is releasably attachable to the reservoir section into a sealing engagement with the reservoir section, directly.

In embodiments of the present invention this can be done by using a connection which comprises a guide to provide the possibility of a sliding movement of the manifold section with respect to the reservoir section. Such sliding movement provides an easy removal of the manifold section and simultaneously an easy but at the same time safe provision of the sealing engagement between the manifold section and the reservoir section. Preferably, this connection is an integral connection between the manifold and the reservoir sections.

In embodiments of the present invention the aforementioned manifold section can comprise a dove-tailed block which is slidable in a dove-tailed guide in the reservoir section. However, this connection can also comprise a block which is shaped in the form of a "T". This kind of connection makes it extremely easy to slide out the manifold section to change, maintain or clean it. However, the guide or slide can have various other shapes or cross sections.

In another embodiment of the present there is further provided a pump for pumping the material in the manifold section to the dispensing port, the pump being connected to the manifold section and being driven by a drive shaft being connected to a drive motor, whereas the manifold section is detachable from the reservoir section without disconnecting the manifold section from the drive motor. According to this embodiment of the present invention it is not necessary anymore to disconnect the manifold from the drive motor so that the time consuming disconnection of the drive motor from the manifold section is avoided.

In embodiments of the present invention the manifold section can be detachable from the reservoir section in a direction substantially parallel to an axis of rotation of the drive shaft, e.g. by sliding the manifold section out of the connection with the reservoir section together with the pump, the drive shaft and the drive motor.

To ease the possibility of sliding out of the manifold section in the aforementioned way there can be provided a unit which comprises at least the drive motor, the drive shaft, the pump and the manifold section so that the unit is movable as a whole relative to the reservoir section to the detach the manifold section from the reservoir section.

However, the manifold section can also be detachable from the reservoir section in a direction substantially perpendicular to an axis of rotation of the drive shaft in other embodiments of the present invention. To be still able to detach the manifold section from the reservoir section without disconnecting the manifold section from the drive motor in such embodiment the drive shaft can comprise a special inventive coupling. Such coupling of the manifold to the motor is realized by a cardan joint comprising a spline shaft which can be pulled apart when the manifold section, e.g. with the pump attached, is released from the reservoir section.

In other embodiments of the present invention the manifold section can comprise at least two independent working manifolds and/or pumps. In such embodiments the manifold section can be a split manifold section comprising at least two independent working manifolds and/or pumps. Each working manifold and/or pump can be slidably engageable with the reservoir section to be able to bring the manifold section into and out of a sealing engagement with the reservoir section. In such embodiments at least two of the working manifolds and/or pumps can be slidable in opposite directions to release or attach the manifold section into a sealing engagement with the reservoir section.

The reservoir section can comprise one reservoir and at least one substantially straight channel to connect the reservoir with an associated manifold section, e.g. below the reservoir section.

The reservoir section of preferred embodiments of the present invention can be pressed with a lever against the heating grid section and/or the manifold section for sealing purposes.

The reservoir section can furthermore comprise horizontal channels from each of the substantially straight channels to connect the channels with an associated stop valve to shut-off the flow of material from the reservoir section to the manifold section beneath.

Generally, the present invention further provides a method for moving a manifold section in an apparatus for dispensing meltable material, comprising the steps of releasably attaching the manifold section into a sealing engagement with a reservoir section for receiving, at least temporarily storing and releasing the material to the manifold section.

Generally, the present invention furthermore provides a method for moving a heating grid section in an apparatus for dispensing meltable material, comprising the steps of releasably attaching the heating grid section to a hopper section for receiving and at least temporarily storing the material and releasably attaching the heating grid section to a reservoir section for receiving and at least temporarily storing the material to be received from the heating grid section.

In the present application the term "moving" can also comprise actions like "attaching" and/or "removing".

### BRIEF DESCRIPTION OF THE DRAWINGS

The invention will now be described on the basis of preferred embodiments and with reference to the drawings. Further objects and many of the attendant advantages of embodiments of the present invention will be readily appreciated and become better understood by reference to the following more detailed description of embodiments in connection with the accompanied drawings. The drawings show:
- Figure 1: shows a side view of a first embodiment of an inventive apparatus for dispensing meltable material;
- Figure 2a: shows a perspective view of the apparatus of Figure 1;
- Figure 2b: shows a perspective view of the apparatus of Figure 1 with further details;
- Figure 2c: shows a cross section view of a part of the apparatus of Figure 1 to show the connection between the reservoir and the manifold in the operating position;
- Figure 3: shows a perspective view of a second embodiment of an inventive apparatus for dispensing meltable material;
- Figure 4: shows a sectional view of the reservoir section of the embodiment of Figure 3; and
- Figure 5: shows another sectional view of the reservoir section of the embodiment of Figure 3.

### DETAILED DESCRIPTION OF PREFERRED EMBODIMENTS

The preferred embodiments shown in the figures are apparatuses for dispensing meltable material, in particular thermoplastic material such as hot melt adhesive.

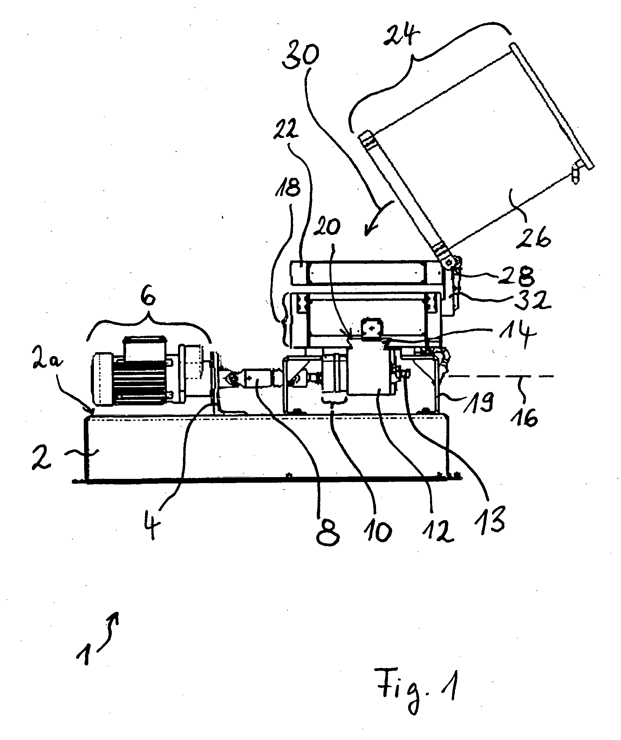

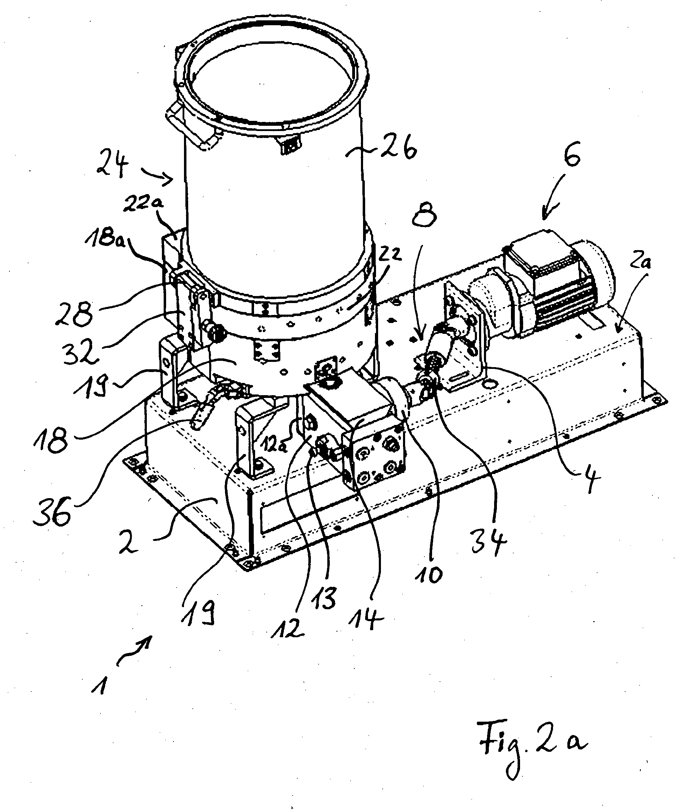

Figure 1 shows a first embodiment 1 of an inventive apparatus for dispensing (not shown) meltable material. Apparatus 1 comprises a support structure 2 with a surface 2a. Mounted to surface 2a is a plate 4 which carries a drive motor 6. Drive motor 6 is connected via a drive shaft 8 to a pump 10. Pump 10 is directly and integrally attached to a manifold section 12. The manifold section 12 serves for receiving material from a reservoir section 18 atop of the manifold section 12 and for connecting the reservoir section 18 to a dispensing port 13. The reservoir section 18 is supported by plates 19, see also Figure 2a.

Preferably, the manifold section 12 has a dove-tailed shaped elongation or block 14. Dove-tailed block 14 is provided on a side of the manifold section 12. The dove-tailed shaped elongation 14 of manifold section 12 is perpendicular to an axis 16 of rotation of the drive shaft 8.

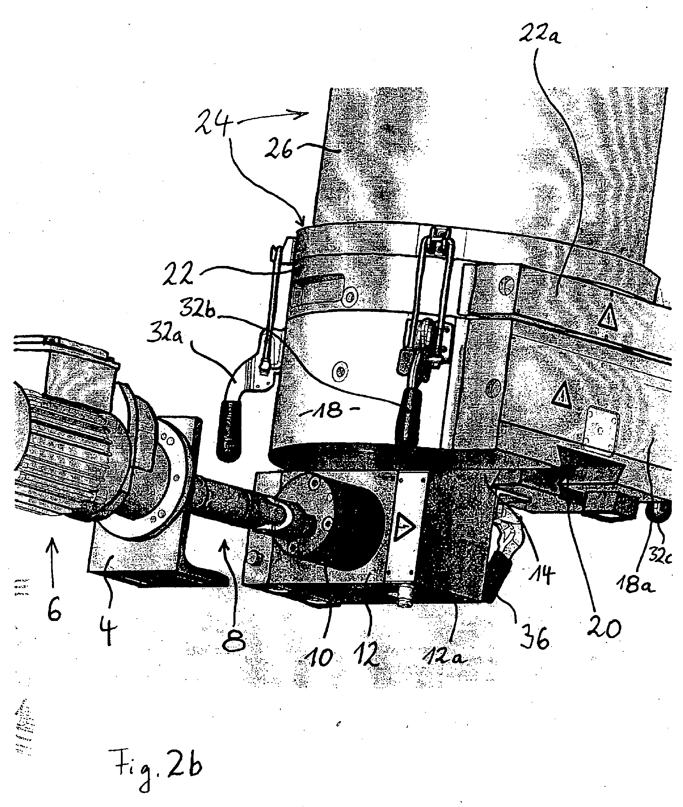

Dove-tailed block 14 provides an integral or mating connection between the manifold section 12 and the reservoir section 18. The integral connection between manifold section 12 and reservoir 18 is further provided by a dove-tailed guide or groove 20 provided in the bottom of reservoir section 18.. The dove-tailed block 14 is slidable in the dove-tailed groove 20. See also Figures 2a and 2b.

According to this sliding engagement between manifold section 12 and reservoir section 18 of the apparatus 1 of Figure 1 the manifold section 12 is detachable from the reservoir section 18 in a direction substantially perpendicular to the axis 16 of rotation of the drive shaft 8.

The integral connection between the manifold section 12 and the reservoir section 18 by the dove-tailed connection 14, 20 connects the manifold section 12 to the reservoir section in a manner in which the manifold section 12 is releasably and directly attachable to the reservoir section 18 into a sealing engagement with the reservoir section 18. Moreover, because of the drive shaft 8 providing a special connection between drive motor 6 and pump 10 it is possible to detach the manifold section 12 from the reservoir section 18 by sliding out the dove-tailed block 14 out of groove 20 without disconnecting the manifold section 12 from any of pump 10, drive shaft 8 or drive motor 6. This is possible because the special connection of drive shaft 8 comprises a cardan joint and a spline shaft 34 which can be pulled apart if the manifold section 12 together with the pump 10 is released from the reservoir section 18 as can be seen in Figure 2a. Because the spline shaft 34 can be pulled apart the drive shaft 8 can be elongated so that the drive shaft 8 does not have to be disconnected from the pump 10 and/or the drive motor 6 when the manifold section 12 is slided away from the reservoir section 18.

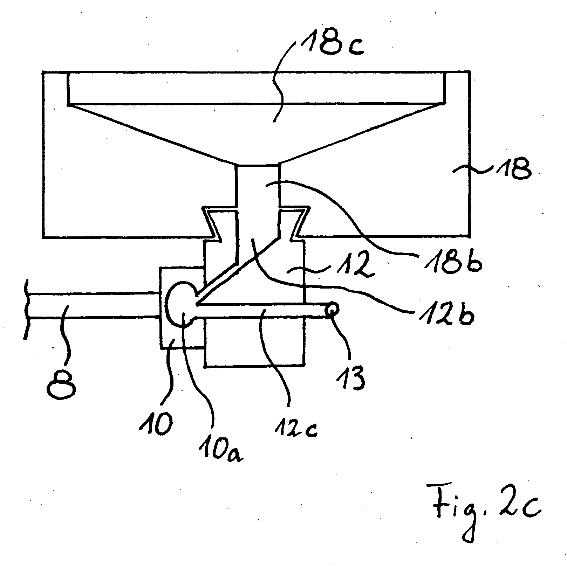

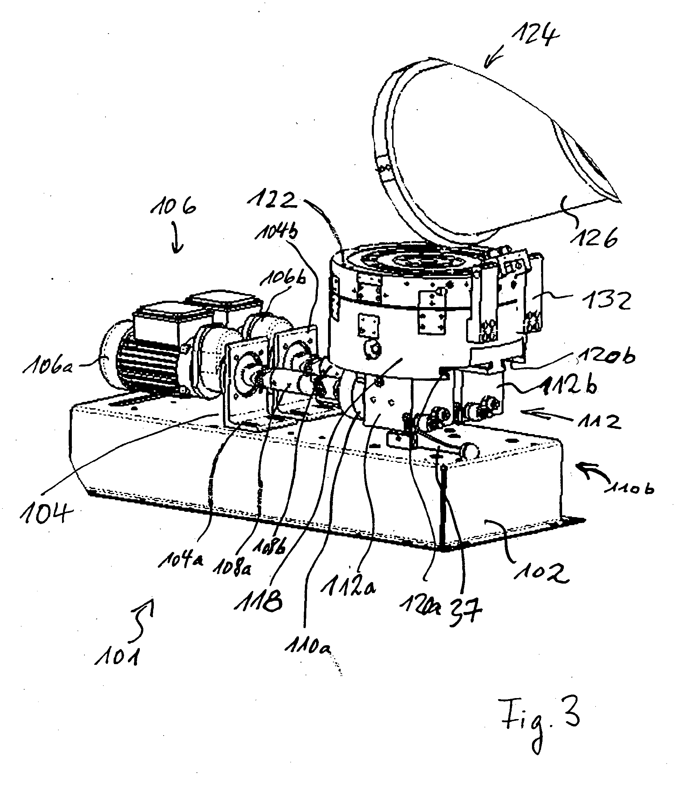

Generally, in the embodiment 1 of Figures 1, 2a, 2b and 2c the manifold section 12 is releasably coupled to the reservoir section 18 by a slidable connection. However, any other way to connect the manifold section 12 and the reservoir section 18 is possible. Moreover, as can be seen in Figures 1 and 2a the manifold section 12 can slide perpendicular to the axis 16 of rotation of the drive shaft 8. However, as will be described with respect to Figure 3, the manifold section 12 can also slide parallel to the axis 16 of rotation of the drive shaft 8 or can slide in any other angular orientation with respect to axis 16 of the drive shaft 8.

Additionally, the manifold section 12 can be a split manifold section 12 as shown in Figure 3, also. It is not only possible to extend the drive shaft 8 by the integrated spline shaft 34 but drive shaft 8 can also be disconnected from drive motor 6 and/or from pump 10, if necessary. However, such disconnection is not necessary to release the manifold section 12 from reservoir section 18.

Atop the reservoir section 18 there is provided a heating grid section 22 for heating the (not shown) material. In Figure 1 heating grid section 22 is shown in a position in which it is released from the surface of the reservoir section 18. However, in working condition the heating grid section 22 is placed directly and sealingly engaged on top of the reservoir section 18 of Figure 1.

Atop of the heating grid section 22 there is provided a hopper section 24 for receiving and at least temporarily storing the meltable material. Hopper section 24 has a tank 26 for storing the material. Hopper section 24 is tiltable around a pivoting access 28 provided on the right hand side of apparatus 1 in Figure 1. However, in working condition hopper section 24 is pivoted down according to arrow 30 on top of heating grid section 22 to connect tank 26 to the heating grid section 22.

When having tilted down hopper section 24 onto heating grid section 22 it is possible to fasten a clamp 32 provided on the right hand side of apparatus 1 of Figure 1. By fastening clamp 32 hopper section 24 is pressed on top of heating grid section 22 to press the heating grid section 22 on top of the reservoir section 18 to provide a sealing connection between hopper section 24, heating grid section 22 and reservoir section 18.

Accordingly, the heating grid section 22 is releasably attachable to the hopper section 24 and simultaneously releasably attachable to the reservoir section 18 by using clamp 32 as a connection between the hopper section 24 and the reservoir section 18 so that the clamp 32 serves as a connection which fixes the heating grid section 22 between the hopper section 24 and the reservoir section 18. Alternatively, two clamps, one for the connection of the hopper section 24 with the heating grid section 22 and one for the connection of the heating grid section 22 with the reservoir section 18 can be provided.

Figure 2a shows a perspective view of the apparatus of Figure 1. It shows that the manifold section 12 can be detached from the reservoir section 18 in a direction substantially perpendicular to the axis 16 of rotation of the drive shaft 8. To be still able to detach the manifold section 12 from the reservoir section 18 without disconnecting the manifold section 12 from the drive motor 6 the drive shaft 6 comprises a special coupling 34. Such coupling 34 of the manifold section 12 to the motor 6 is realized by a cardan joint comprising a spline shaft 34 which can be pulled apart when the manifold section 12, e.g. with the pump 10 attached, is released from the reservoir section 18. The manifold section 12 can be pressed against the reservoir section 18 and/or the heating grid section 22 by a lever 36 which presses against the dove-tailed block 14 from side to press the block 14 and the therefore the manifold section 12 vertically against the bottom of the reservoir section 18 to provide a sealing engagement between the manifold section 12 and the reservoir section 18.

As further details with respect to Figure 1 the drawing of Figure 2a further depicts heating units 18a and 22a for providing heat to the reservoir section 18 and the heating grid section 22, respectively. Heating units 18a and 22a are attached directly to the reservoir section 18 and the heating grid section 22, respectively. Also, manifold section 12 comprises a heating unit 12a at the side of the manifold section 12 to provide enough heat to the manifold section 12 if the heat provided by the heated reservoir section 18 is not sufficient to heat also the manifold section 12.

Figure 2b shows further details of the apparatus of Figures 1 and 2a. According to Figure 2b further clamps 32a and 32b are provided to provide a connection between the hopper section 24 and the reservoir section 18 so that clamps 32a and 32b further support clamp 32 to provide a connection between hopper section 24 and reservoir section 18 which fixes the heating grid section 22 between the lower part of the hopper section 24 and the reservoir section 18. In Figure 2b an additional lever part 32c of clamp 32 is additionally depicted with respect to the drawings of Figures 1 and 2a.

Figure 2c further shows a cross section view showing the connection between the reservoir section 18 and the manifold section 12 in an operating position of the apparatus 1 of Figures 1, 2a and 2b. According to Figure 2c there is provided a channel 18b in reservoir section 18 below a reservoir 18c of reservoir section 18. Channel 18b connects the reservoir 18c of reservoir section 18 with a corresponding channel 12b in manifold section 12. Channel 12b is connected to a schematically depicted pumping unit 10a of pump 10 which is connected to another channel 12c in manifold section 12 which channel 12c is connecting pumping unit 10a with the dispensing port 13.

Figure 3 shows a second embodiment 101 of the inventive apparatus for dispensing meltable material. Same parts are designated by the same reference numerals as in Figure 3 but having those same reference numerals enhanced by 100.

The main difference between embodiment 101 of Figure 3 and embodiment 1 of Figures 1, 2a, 2b and 2c is that the manifold section 112 comprises two independent working manifolds 112a and 112b and two independent pumps 110a, 110b, two independent drive shafts 8a, 8b and two independent drive motors 106a, 106b, each being connected in the same manner to each other as in embodiment 1 of Figure 1, 2a, 2b and 2c. Although the bodies of working manifolds 112a and 112b, pumps 110a, 110b, drive shafts 8a, 8b and drive motors 106a, 106b, are separate, it is possible to connect working manifolds 112a and 112b, pumps 110a, 110b, drive shafts 8a, 8b and drive motors 106a, 106b, so that they are controlled by only one control unit (not shown). It is also possible to control working manifolds 112a and 112b, pumps 110a, 110b, drive shafts 8a, 8b and drive motors 106a, 106b, independently so that they are controlled by two or more control units (not shown).

According to the embodiment 101 of Figure 3 the working manifold 112a, 112b are detachable from the reservoir section 118 in a direction substantially parallel to the respective axis of rotation of the drive shafts 108a, 108b. Drive motor 106a, drive shaft108a, pump 110a and manifold section 112a provide a unit which is movable as a whole relative to the reservoir section 118 to detach the working manifold 112a from the reservoir section 118. The same goes for the second unit comprising the other drive motor 106b, the other drive shaft 108b, the other pump 110b and the other working manifold 112b.

Although, in Figure 3, the heating grid section 122 is depicted in a status in which it is lowered on the reservoir section 118 the function of the heating grid section 122 is the same as the function of the heating grid section 22 of the embodiment 1 of Figures 1 and 2.

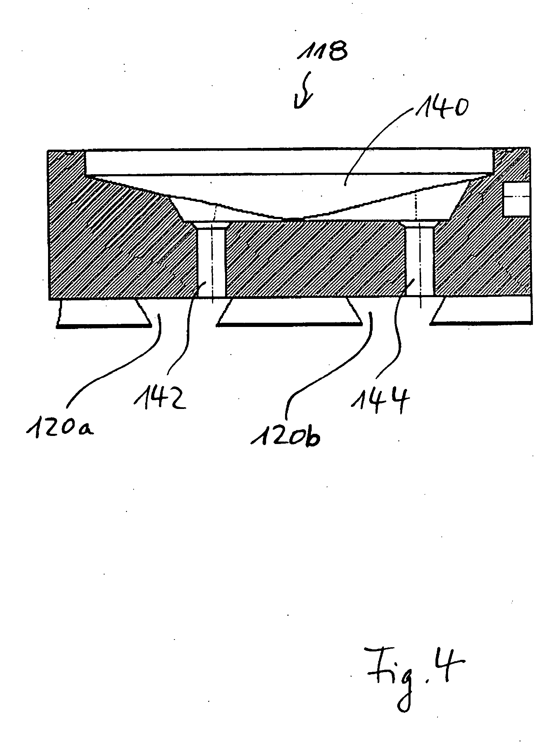

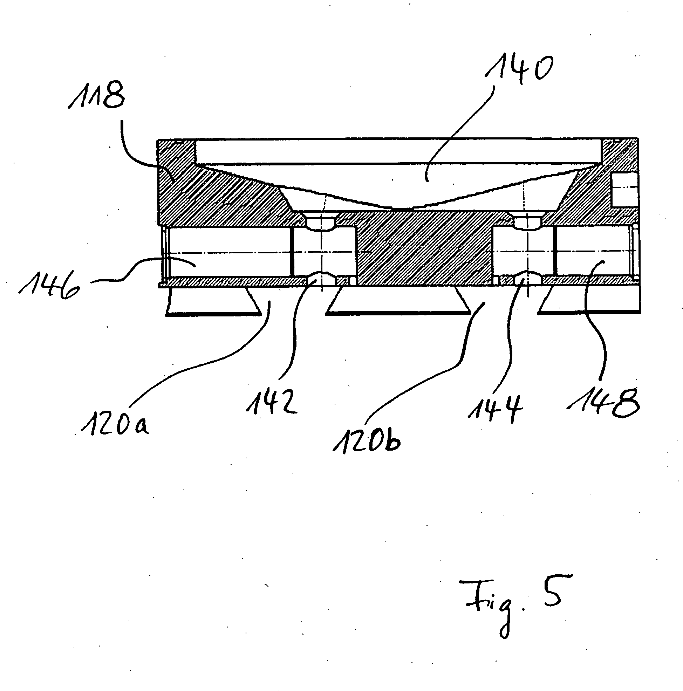

The working manifolds 112a, 112b are placed directly undemeath of the reservoir section 118. There are straight channels 142, 144 (not shown in Figure 3, but shown in Figures 4 and 5) from the reservoir section 118 to the working manifolds 112a, 112b. When the working manifolds 112a, 112b are removed, the straight channels 142, 144 can be easily cleaned even by using a hand drill or punch.

In Figure 3 the working manifolds 112a, 112b are shown in a position in which they are in sealing engagement with the reservoir section 118. To press the working manifolds 112a, 112b against the reservoir section 118 there is provided a lever 37 which presses against the working manifolds 112a, 112b from to bottom to press the working manifolds 112a, 112b vertically against the bottom of the reservoir section 118 to provide a sealing engagement between the working manifolds 112a, 112b and the reservoir section 118. Other clamping or sealing means may be used if required.

Figure 4 shows the reservoir section 118 of Figure 3. The depicted reservoir section 118 comprises one reservoir 140 and two substantially straight channels 142, 144 to connect the reservoir 140 with the associated manifold section 112 of Figure 3 below the reservoir section 118.

Figure 5 shows the reservoir section 118 of Figure 4 in a different sectional drawing. The depicted section of the reservoir section 118 shows that the reservoir section 118 furthermore comprises horizontal channels 146, 148 from each of the two substantially straight channels 142, 144 to connect the channels 142, 144 with an associated stop valve (not shown) to shut-off the flow of material from the reservoir section 118 to the manifold section 112 beneath.

Furthermore, it should be stated, that the mating connection between the manifold section 12 and the reservoir section 18 can comprise other mating types other than a dove-tail shaped connection. It is e.g. also possible to have a projection on top of the manifold section 12 with a different shape and a complimentary shaped recess in the bottom of the reservoir section 18 to make the mating connection to the reservoir section 18. Moreover, the dove tailed or otherwise shaped projection could also be carried by the reservoir section 18 and the recess could also be provided in the manifold section 12.

The method for moving the heating grid section 22, 122 in the apparatus 1, 101 for dispensing meltable material comprises the steps of releasably attaching the heating grid section 22, 122 to a hopper section 24, 124 for receiving and at least temporarily storing the material and releasably attaching the heating grid section 22, 122 to a reservoir section 18, 118 for receiving and at least temporarily storing the material to be received from the heating grid section 22, 122.

The method for moving the manifold section 12, 112, 112a, 112b in the apparatus 1, 101 for dispensing meltable material comprises the steps of releasably attaching the manifold section 12, 112, 112a, 112b into a sealing engagement with a reservoir section 18, 118 for receiving, at least temporarily storing and releasing the material to the manifold section 12, 112, 112a, 112b.

## Claims

1. An apparatus for dispensing meltable material, comprising:
a hopper section (24, 124) for receiving and at least temporarily storing the material, and
a heating grid section (22, 122) for heating the material, the heating grid section (22, 122) being connected to the hopper section (24, 124), and a reservoir section (18, 118) for receiving and at least temporarily storing the material from the heating grid section (22, 122), the reservoir section (18, 118) being connected to the heating grid section (22, 122),
wherein the heating grid section (22, 122) is releasably attachable to the hopper section (24, 124) and the reservoir section (18, 118), **characterized in that** the hopper section (24, 124) is tiltable with respect to the heating grid section (22, 122).

2. The apparatus of claim 1,
whereas the heating grid section (22, 122) is releasably attachable to the hopper section (24, 124) and/or the reservoir section (18, 118) by at least one releasable clamp (32, 132).

3. The apparatus of at least one of claims 1-2,
further comprising a connection (32, 132) between the hopper section (24, 124) and the reservoir section (18, 118) so that the connection (32, 132) fixes the heating grid section (22, 122) between the hopper section (24, 124) and the reservoir section (18, 118).

4. The apparatus of claim 3,
whereas the connection comprises at least one clamp (32, 132).

5. The apparatus of at least one of claims 1-4, further comprising:
a manifold section (12, 112, 112a, 112b) for receiving material from the reservoir section (18, 118) and for connecting the reservoir section (18, 118) to a dispensing port (13), the manifold section (12, 112, 112a, 112b) being connected to the reservoir section (18, 118),
**characterized in that** the manifold section (12, 112, 112a, 112b) is releas-ably and directly attachable to the reservoir section (18, 118) into a sealing engagement with the reservoir section (18, 118).

6. The apparatus of claim 5,
further comprising an integral connection (14, 20, 120a, 120b) between the manifold section (12, 112, 112a, 112b) and the reservoir section (18, 118).

7. The apparatus of claim 6,
whereas the integral connection (14, 20, 120a, 120b) comprises a guide (20, 120a, 120b) to provide the possibility of a sliding movement of the manifold section (12, 112, 112a, 112b) with respect to the reservoir section (18, 118).

8. The apparatus of at least one of claims 5-7,
whereas the manifold section (12, 112, 112a, 112b) comprises a dove-tailed block (14) which is slidable in a dove-tailed guide (20, 120a, 120b) in the reservoir section (18, 118).

9. The apparatus of at least one of claims 5-8,
further comprising a pump (10, 110a, 110b) for pumping the material in the manifold section (12, 112, 112a, 112b) to the dispensing port (13), the pump (10, 110a, 110b) being connected to the manifold section (12, 112, 112a, 112b) and being driven by a drive shaft (8, 108a, 108b) being connected to a drive motor (6, 106a, 106b),
whereas the manifold section (12, 112, 112a, 112b) is detachable from the reservoir section (18, 118) without disconnecting the manifold section (12, 112, 112a, 112b) from the drive motor (6, 106a, 106b).

10. The apparatus of claims 9,
whereas the manifold section (12, 112, 112a, 112b) is detachable from the reservoir section (18, 118) in a direction substantially parallel to an axis (16) of rotation of the drive shaft (8, 108a, 108b).

11. The apparatus of claims 9 or 10,
whereas a unit comprising the drive motor (6, 106a, 106b), the drive shaft (8, 108a, 108b), the pump (10, 110a, 110b) and the manifold section (12, 112, 112a, 112b) is movable as a whole relative to the reservoir section (18, 118) to detach the manifold section (12, 112, 112a, 112b) from the reservoir section (18, 118).

12. The apparatus of at least one of claims 9-11,
whereas the drive shaft (8, 108a, 108b) comprises a cardan joint and/or a spline shaft (34) coupling.

13. The apparatus of at least one of claims 9-12,
whereas the manifold section (12, 112, 112a, 112b) is detachable from the reservoir section (18, 118) in a direction substantially perpendicular to an axis (16) of rotation of the drive shaft (8, 108a, 108b).

14. The apparatus of at least one of claims 5-13,
whereas the manifold section (12, 112, 112a, 112b) comprises at least two independent working manifolds (112a, 112b) and/or pumps (110a, 110b).

15. The apparatus of claim 14,
whereas at least one working manifold (112a, 112b) and/or pump (110a, 110b) is slidable engagable with the reservoir section (18, 118).

16. The apparatus of claims 14 or 15,
whereas at least two of the working manifolds (112a, 112b) and/or pumps (110a, 110b) are slidable in opposite directions.

17. The apparatus of at least one of claims 5-16,
whereas the reservoir section (18, 118) comprises at least one reservoir (140) and at least one substantially straight channel (142, 144) to connect the reservoir (140) with an associated manifold section (12, 112, 112a, 112b) below the reservoir section (18, 118).

18. A method for attaching a heating grid section (22, 122) in an apparatus (1, 101) for dispensing meltable material, comprising the steps of:
placing the heating grid section between a hopper section (24, 124) for receiving and at least temporarily storing the material and a reservoir section (18, 118) for receiving and at least temporarily storing the material to be received from the heating grid section (22, 122),
releasably attaching the heating grid section (22, 122) to the hopper section (24, 124) and releasably attaching the heating grid section (22, 122) to the reservoir section (18, 118)
removing the heating grid section (22, 122) by first tilting away the hopper section (24, 124) from the heating grid section (22, 122) and then pulling the heating grid section (22, 122) away from the reservoir section (18, 118),

19. The method of claim 18, further comprising the steps of:
pressing the heating grid section (22, 122) between the hopper section (24, 124) and the reservoir section (18, 118) by using the hopper section (24, 124) and the reservoir section (18, 118).

20. The method of claim 19, further comprising the steps of:
clamping the heating grid section (22, 122) between the hopper section (24, 124) and the reservoir section (18, 118) by using a clamp connecting the hopper section (24, 124) and the reservoir section (18, 118).

21. The method of at least one of claims 18-20, further comprising the steps of:
releasably attaching a manifold section (12, 112, 112a, 112b) into a sealing engagement with the reservoir section (18, 118).

22. The method of claim 21, further comprising the steps of:
performing a sliding movement of the manifold section (12, 112, 112a, 112b) with respect to the reservoir section (18, 118) when moving the manifold section (12, 112, 112a, 112b) relative to the reservoir section (18, 118).

23. The method of claim 22, further comprising the steps of:
using a dove-tailed connection between the manifold section (12, 112, 112a, 112b) and the reservoir section (18, 118) for providing a sliding engagement between the manifold section (12, 112, 112a, 112b) and the reservoir section (18, 118).

## Patentansprüche

1. Vorrichtung zur Abgabe von schmelzbarem Material, umfassend:
einen Ladeabschnitt (24, 124), um das Material aufzunehmen und wenigstens zeitweise zu lagern, und
einen Heizgitterabschnitt (22, 122), um das Material aufzuheizen, wobei der Heizgitterabschnitt (22, 122) mit dem Ladeabschnitt (24, 124) verbunden ist, und einen Reservoirabschnitt (18, 118), um das Material aus dem Heizgitterabschnitt (22, 122) aufzunehmen und wenigstens zeitweise zu lagern, wobei der Reservoirabschnitt (18, 118) mit dem Heizgitterabschnitt (22, 122) verbunden ist,
wobei der Heizgitterabschnitt (22, 122) lösbar an dem Ladeabschnitt (24, 124) und dem Reservoirabschnitt (18, 118) angebracht werden kann, **dadurch gekennzeichnet, dass** der Ladeabschnitt (24, 124) gegenüber dem Heizgitterabschnitt (22, 122) kippbar Ist.

2. Vorrichtung nach Anspruch 1,
wobei der Heizgitterabschnitt (22, 122) lösbar an dem Ladeabschnitt (24, 124) und/oder dem Reservoirabschnitt (18, 118) durch wenigstens eine lösbare Klammer (32, 132) angebracht werden kann.

3. Vorrichtung nach wenigstens einem der Ansprüche 1-2,
weiter umfassend eine Verbindung (32, 132) zwischen dem Ladeabschnitt (24, 124) und dem Reservoirabschnitt (18, 118), sodass die Verbindung (32, 132) den Helzgitterabschnitt (22, 122) zwischen dem Ladeabschnitt (24, 124) und dem Reservoirabschnitt (18, 118) fixiert.

4. Vorrichtung nach Anspruch 3,
wobei die Verbindung wenigstens eine Klammer (32, 132) umfasst.

5. Vorrichtung nach wenigstens einem der Ansprüche 1-4, weiter umfassend:
einen Sammelabschnitt (12, 112, 112a, 112b), um Material aus dem Reservoirabschnitt (18, 118) aufzunehmen und um den Reservoirabschnitt (18, 118) mit einem Abgabeanschluss (13) zu verbinden, wobei der Sammelabschnitt (12, 112, 112a, 112b) mit dem Reservoirabschnitt (18, 118) verbunden ist;
**dadurch gekennzeichnet, dass** der Sammelabschnitt (12, 112, 112a, 112b) lösbar und direkt an dem Reservoirabschnitt (18, 118) in einem dichtenden Eingriff mit dem Reservoirabschnitt (18, 118) angebracht werden kann.

6. Vorrichtung nach Anspruch 5,
weiter umfassend eine integrale Verbindung (14, 20, 120a, 120b) zwischen dem Sammelabschnitt (12, 112, 112a, 112b) und dem Reservoirabschnitt (18, 118).

7. Vorrichtung nach Anspruch 6,
wobei die integrale Verbindung (14, 20, 120a, 120b) eine Führung (20, 120a, 120b) umfasst, um die Möglichkeit einer gleitenden Bewegung des Sammelabschnitts (12, 112, 112a, 112b) gegenüber dem Reservoirabschnitt (18, 118) zu bieten.

8. Vorrichtung nach wenigstens einem der Ansprüche 5-7,
wobei der Sammelabschnitt (12, 112, 112a, 112b) einen schwalbenschwanzförmigen Block (14) umfasst, der in ein einer schwalbenschwanzförmigen Führung (20, 120a, 120b) im Reservoirabschnitt (18, 118) gleiten kann.

9. Vorrichtung nach wenigstens einem der Ansprüche 5-8,
weiter umfassend eine Pumpe (10, 110a, 110b), um das Material aus dem Sammelabschnitt (12, 112, 112a, 112b) zum Abgabeanschluss (13) zu pumpen, wobei die Pumpe (10, 110a, 110b) mit dem Sammelabschnitt (12, 112, 112a, 112b) verbunden ist und durch eine Antriebswelle (8, 108a, 108b) angetrieben ist, die mit einem Antriebsmotor (6, 106a, 106b) verbunden ist,
wobei der Sammelabschnitt (12, 112, 112a, 112b) vom Reservoirabschnitt (18, 118) abgenommen werden kann, ohne den Sammelabschnitt (12, 112, 112a, 112b) vom Antriebsmotor (6, 106a, 106b) zu trennen.

10. Vorrichtung nach Anspruch 9,
wobei der Sammelabschnitt (12, 112, 112a, 112b) vom Reservoirabschnitt (18, 118) in einer Richtung abgenommen werden kann, die im Wesentlichen parallel zu einer Rotationsachse (16) der Antriebswelle (8, 108a, 108b) ist.

11. Vorrichtung nach den Ansprüchen 9 oder 10,
wobei eine Einheit, umfassend den Antriebsmotor (6, 106a, 106b), die Antriebswelle (8, 108a, 108b), die Pumpe (10, 110a, 110b) und den Sammelabschnitt (12, 112, 112a, 112b), als Ganzes relativ zum Reservoirabschnitt (18, 118) bewegt werden kann, um den Sammelabschnitt (12, 112, 112a, 112b) von dem Reservoirabschnitt (18, 118) zu lösen.

12. Vorrichtung nach wenigstens einem der Ansprüche 9-11,
wobei die Antriebswelle (8, 108a, 108b) eine Kupplung als Kardangelenk-und/oder als Keilwelle (34) umfasst.

13. Vorrichtung nach wenigstens einem der Ansprüche 9-12,
wobei der Sammelabschnitt (12, 112, 112a, 112b) von dem Reservoirabschnitt (18, 118) in einer Richtung abgenommen werden kann, die im Wesentlichen senkrecht zu einer Rotationsachse (16) der Antriebswelle (8, 108a, 108b) ist.

14. Vorrichtung nach wenigstens einem der Ansprüche 5-13,
wobei der Sammelabschnitt (12, 112, 112b) wenigstens zwei unabhängige funktionsfähige Sammler (112a, 112b) und/oder Pumpen (110a, 110b) umfasst.

15. Vorrichtung nach Anspruch 14,
wobei wenigstens ein funktionsfähiger Sammler (112a, 112b) und/oder eine Pumpe (110a, 110b) gleitend mit dem Reservoirabschnitt (18, 118) in Eingriff bringbar ist.

16. Vorrichtung nach den Ansprüchen 14 oder 15,
wobei wenigstens zwei der funktionsfähigen Sammler (112a, 112b) und/oder Pumpen (110a, 110b) in entgegengesetzte Richtungen gleiten können.

17. Vorrichtung nach wenigstens einem der Ansprüche 5-16,
wobei der Reservoirabschnitt (18, 118) wenigstens einen Auffangbehälter (140) und wenigstens einen im Wesentlichen geraden Kanal (142, 144) umfasst, um den Auffangbehälter (140) mit einem dazugehörigen Sammelabschnitt (12, 112, 112a, 112b) unterhalb des Reservoirabschnitts (18, 118) zu verbinden.

18. Verfahren um einen Heizgitterabschnitt (22, 122) in einer Vorrichtung (1, 101) zur Abgabe von schmelzbaren Material anzubringen, umfassend die Schritte:
Platzieren des Heizgitterabschnitts zwischen einem Ladeabschnitt (24, 124), um das Material aufzunehmen und wenigstens zeitweise zu lagern, und einem Reservoirabschnitt (18, 118), um das Material zur Aufnahme von dem Heizgitterabschnitt (22, 122) aufzunehmen und wenigstens zeitweise zu lagern,
lösbares Anbringen des Heizgitterabschnitts (22, 122) an dem Ladeabschnitt (24, 124) und lösbares Anbringen des Heizgitterabschnitts (22, 122) an dem Reservoirabschnitt (18, 118),
Entfernen des Heizgitterabschnitts (22, 122), zuerst durch Wegkippen des Ladeabschnitts (24, 124) vom Heizgitterabschnitt (22, 122) und dann durch Ziehen des Heizgitterabschnitts (22, 122) weg vom Reservoirabschnitt (18, 118).

19. Verfahren nach Anspruch 18, weiter umfassend die Schritte:
Drücken des Heizgitterabschnitts (22, 122) zwischen den Ladeabschnitt (24, 124) und den Reservoirabschnitt (18, 118) durch Benutzen des Ladeabschnitts (24, 124) und des Reservoirabschnitts (18, 118).

20. Verfahren nach Anspruch 19, weiter umfassend die Schritte:
Klemmen des Heizgitterabschnitts (22, 122) zwischen den Ladeabschnitt (24, 124) und den Reservoirabschnitt (18, 118) durch Benutzen einer Klammer, die den Ladeabschnitt (24, 124) und den Reservoirabschnitt (18, 118) verbindet.

21. Verfahren nach wenigstens einem der Ansprüche 18-20, weiter umfassend die Schritte:
Lösbares Anbringen eines Sammelabschnitts (12, 112, 112a, 112b) in dichtenden Eingriff mit dem Reservoirabschnitt (18, 118).

22. Verfahren nach Anspruch 21, weiter umfassend die Schritte:
Ausführen einer Gleitbewegung des Sammelabschnitts (12, 112, 112a, 112b) gegenüber dem Reservoirabschnitt (18, 118), wenn der Sammelabschnitt (12, 112, 112a, 112b) relativ zum Reservoirabschnitt (18, 118) bewegt wird.

23. Verfahren nach Anspruch 22, weiter umfassend die Schritte:
Verwenden einer schwalbenschwanzförmigen Verbindung zwischen dem Sammelabschnitt (12, 112, 112a, 112b) und dem Reservoirabschnitt (18, 118) um einen gleitenden Eingriff zwischen dem Sammelabschnitt (12, 112, 112a, 112b) und dem Reservoirabschnitt (18, 118) zu bieten.

## Revendications

1. Appareil pour distribuer un matériau fusible, comprenant :
une section de trémie (24, 124) pour recevoir et au moins temporairement stocker le matériau, et
une section de grille de chauffage (22, 122) pour chauffer le matériau, la section de grille de chauffage (22, 122) étant raccordée à la section de trémie (24, 124) et une section de réservoir (18, 118) pour recevoir et au moins temporairement stocker le matériau provenant de la section de grille de chauffage (22, 122), ladite section de réservoir (18, 118) étant raccordée à la section de grille de chauffage (22, 122),
dans lequel la section de grille de chauffage (22, 122) est fixée de manière détachable à la section de trémie (24, 124) et à la section de réservoir (18, 118), **caractérisé en ce que** la section de trémie (24, 124) est inclinable par rapport à la section de grille de chauffage (22, 122).

2. Appareil selon la revendication 1,
dans lequel la section de grille de chauffage (22, 122) peut être fixée de manière détachable à la section de trémie (24, 124) et/ou à la section de réservoir (18, 118) par au moins un collier détachable (32, 132).

3. Appareil selon au moins une des revendications 1 à 2,
comprenant en outre un raccordement (32, 132) entre la section de trémie (24, 124) et la section de réservoir (18, 118), de sorte que le raccordement (32, 132) fixe la section de grille de chauffage (22, 122) entre la section de trémie (24, 124) et la section de réservoir (18, 118).

4. Appareil selon la revendication 3,
dans lequel le raccordement comprend au moins un collier (32, 132).

5. Appareil selon au moins l'une quelconque des revendications 1 à 4, comprenant en outre :
une section de collecteur (12, 112, 112a, 112b) pour recevoir le matériau de la section de réservoir (18, 118) et pour raccorder à section de réservoir (18, 118) à un orifice de distribution (13), la section de collecteur (12, 112, 112a, 112b) étant raccordée à la section de réservoir (18, 118),
**caractérisé en ce que** la section de collecteur (12, 112, 112a, 112b) peut être fixée de maniére détachable et directement à la section de réservoir (18, 118) en prise étanche avec la section de réservoir (18, 118).

6. Appareil selon la revendication 5,
comprenant en outre un raccordement d'un seul tenant (14, 20, 120a, 120b) entre la section de collecteur (12, 112, 112a, 112b) et la section de réservoir (18, 118).

7. Appareil selon la revendication 6,
dans lequel le raccordement d'un seul tenant (14, 20, 120a, 120b) comprend un guide (20, 120a, 120b) pour fournir la possibilité d'un mouvement coulissant de la section de collecteur (12, 112, 112a, 112b) par rapport à la section de réservoir (18, 118).

8. Appareil selon au moins une des revendications 5 à 7,
dans lequel la section de collecteur (12, 112, 112a, 112b) comprend un bloc en queue d'aronde (14) qui peut coulisser dans un guide en queue d'aronde (20,120a, 120b) dans la section de réservoir (18, 118).

9. Appareil selon au moins une des revendications 5 à 8,
comprenant en outre une pompe (10, 110a, 110b) pour pomper le matériau dans la section de collecteur (12, 112, 112a, 112b) jusqu'à l'orifice de distribution (13), la pompe (10, 110a, 110b) étant raccordée à la section de collecteur (12, 112, 112a, 112b) et étant entraînée par un arbre d'entraînement (8, 108a, 108b) raccordé à un moteur d'entraînement (6, 106a, 106b),
dans lequel la section de collecteur (12, 112, 112a, 112b) est détachable de la section de réservoir (18, 118) sans déconnecter la section de collecteur (12, 112, 112a, 112b) du moteur d'entraînement (6, 106a, 106b).

10. Appareil selon la revendication 9,
dans lequel la section de collecteur (12, 112, 112a, 112b) est détachable de la section de réservoir (18, 118) dans une direction sensiblement parallèle à un axe (16) de rotation de l'arbre d'entraînement (8, 108a, 108b).

11. Appareil selon les revendications 9 ou 10,
dans lequel une unité comprenant le moteur d'entraînement (6, 106a, 106b), l'arbre d'entrainement (8, 108a, 108b), la pompe (10, 110a, 110b) et la section de collecteur (12, 112, 112a, 112b) est mobile dans son ensemble par rapport à la section de réservoir (18, 118) pour détacher la section de collecteur (12, 112, 112a, 112b) de la section de réservoir (18, 118).

12. Appareil selon au moins une des revendications 9 à 11,
dans lequel l'arbre d'entraînement (8, 108a, 108b) comprend un joint de cardan et/ou un raccord d'arbre cannelé (34).

13. Appareil selon au moins une des revendications 9 à 12,
dans lequel la section de collecteur (12, 112, 112a, 112b) est détachable de la section de réservoir (18, 118) dans une direction sensiblement perpendiculaire à un axe (16) de rotation de l'arbre d'entraînement (8, 108a, 108b).

14. Appareil selon au moins une des revendications 5 à 13,
dans lequel la section de collecteur (12, 112, 112a, 112b) comprend au moins deux collecteurs de fonctionnement indépendants (112a, 112b) et/ou des pompes (110a, 110b).

15. Appareil selon la revendication 14,
dans lequel au moins un collecteur de fonctionnement (112a, 112b) et/ou une pompe (110a, 110b) peut être mis(e) en prise en coulissement avec la section de réservoir (18,118).

16. Appareil selon la revendication 14 ou 15,
dans lequel au moins deux des collecteurs de fonctionnement (112a, 112b) et/ou des pompes (110a, 110b) coulissent dans des directions opposées.

17. Appareil selon au moins une des revendications 5 à 16,
dans lequel la section de réservoir (18, 118) comprend au moins un réservoir (140) et au moins un canal sensiblement droit (142, 144) pour raccorder le réservoir (140) avec une section de collecteur associée (12, 112, 112a, 112b) sous la section de réservoir (18, 118).

18. Procédé pour fixer une section de grille de chauffage (22, 122) dans un appareil (1, 101) pour distribuer un matériau fusible, comprenant les étapes consistant à :
placer la section de grille de chauffage entre une section de trémie (24, 124) pour recevoir et au moins temporairement stocker le matériau et une section de réservoir (18, 118) pour recevoir et au moins temporairement stocker le matériau à recevoir de la section de grille de chauffage (22, 122),
fixer de manière détachable la section de grille de chauffage (22, 122) à la section de trémie (24, 124) et fixer de manière détachable la section de grille de chauffage (22, 122) à la section de réservoir (18, 118)
enlever la section de grille de chauffage (22, 122) en inclinant tout d'abord la section de trémie (24, 124) en l'éloignant de la section de grille de chauffage (22, 122) puis en tirant la section de grille de chauffage (22, 122) en l'éloignant de la section de réservoir (18, 118).

19. Procédé selon la revendication 18, comprenant en outre les étapes consistant à :
comprimer la section de grille de chauffage (22, 122) entre la section de trémie (24, 124) et la section de réservoir (18, 118) en utilisant la section de trémie (24, 124) et la section de réservoir (18, 118).

20. Procédé selon la revendication 19, comprenant en outre les étapes consistant à :
serrer la section de grille de chauffage (22, 122) entre la section de trémie (24, 124) et la section de réservoir (18,118), en utilisant un collier reliant la section de trémie (24, 124) et la section de réservoir (18, 118).

21. Procédé selon au moins une des revendications 18 à 20, comprenant en outre les étapes consistant à :
fixer de manière amovible une section de collecteur (12, 112, 112a, 112b) en prise étanche avec la section de réservoir (18, 118).

22. Procédé selon la revendication 21, comprenant en outre les étapes consistant à :
effectuer un mouvement coulissant de la section de collecteur (12, 112, 112a, 112b) par rapport à la section de réservoir (18, 118) lors du déplacement de la section de collecteur (12, 112, 112a, 112b) par rapport à la section de réservoir (18, 118).

23. Procédé selon la revendication 22, comprenant en outre les étapes consistant à :
utiliser un raccordement en queue d'aronde entre la section de collecteur (12, 112, 112a, 112b) et la section de réservoir (18, 118) pour fournir une prise coulissante entre la section de collecteur (12, 112, 112a, 112b) et la section de réservoir (18, 118).
